# EUROPEAN PATENT SPECIFICATION

(11) **EP 2 406 700 B1**
(45) Date of publication and mention of the grant of the patent: **29.08.2018**
(21) Application number: 10712198.0
(22) Date of filing: 11.03.2010
(51) Int. Cl.: G06F 3/01

(54) **SYSTEM AND METHOD FOR PROVIDING FEATURES IN A FRICTION DISPLAY**
SYSTEM UND VERFAHREN ZUR BEREITSTELLUNG VON MERKMALEN IN EINEM FRIKTIONSDISPLAY
SYSTÈME ET PROCÉDÉ DE FOURNITURE DE CARACTÉRISTIQUES DANS UN DISPOSITIF D'AFFICHAGE À FROTTEMENT

(30) Priority: 12.03.2009 US 159482 P; 17.11.2009 US 262041 P; 17.11.2009 US 262038 P; 29.01.2010 US 696893; 29.01.2010 US 696900; 29.01.2010 US 696908; 29.01.2010 US 697010; 29.01.2010 US 697037; 29.01.2010 US 697042
(43) Date of publication of application: 18.01.2012
(60) Divisional application: 18182803.9
(73) Proprietor: Immersion Corporation, San Jose CA 95134 (US)
(72) Inventor: CRUZ-HERNANDEZ, Juan, Manuel, Montreal Québec H3Z 1T1 (CA); GRANT, Danny, A., Laval Québec H7M 2A1 (CA)
(74) Representative: Phillips & Leigh LLP
(86) International application number: PCT/US2010/026894
(87) International publication number: WO 2010/105001

(56) References cited:
- EP-A2- 1 748 350
- US-A1- 2002 033 795
- US-A1- 2005 057 528
- US-A1- 2006 119 586
- US-A1- 2006 209 037
- US-A1- 2008 068 348
- US-A1- 2009 106 655

## Description

### Background

Touch-enabled devices have been increasingly popular. For instance, mobile and other devices may be configured with touch-sensitive displays so that a user can provide input by touching portions of the touch-sensitive display. As another example, a touch-enabled surface separate from a display may be used for input, such as a trackpad, mouse, or other device.

For example, a user may touch a portion of the display or surface that is mapped to an on-screen graphical user interface, such as a button or control. As another example, a gesture may be provided, such as a sequence of one or more touches, drags across the surface, or other recognizable patterns sensed by the device. Although touch-enabled displays and other touch-based interfaces have greatly enhanced device functionality, drawbacks remain. For instance, even if a keyboard is displayed on a screen, a user accustomed to a physical keyboard may not have the same experience while using the touch-enabled device.

Patent document US2008/0068348 describes a haptic feedback device used to provide input to a computer. The device comprises a housing, one or more portions separately moveable relative to the housing and an actuator configured to impart a first haptic force to one of the separately moveable portions and a second haptic force to another of the separately moveable portions, or to the housing.

Patent document US2006/0119586 describes a planar touch control to provide input to a computer. The touch control comprises a touch input device with a planar touch surface that inputs a position signal to a processor associated with the computer based on a location of user implemented contact on the touch surface.

Patent document EP1748350 describes a touch device with a touch panel and a vibration device to provide tactile feedback to a user to locate a key on a display. A processor generates a drive signal to the vibration device when the position on the display touched by a finger or stylus corresponds to a location of a key on the display.

Patent document US2006/0209037 describes a transparent haptic overlay device including a transparent overlay for transmitting the force of the user to a display, an actuator for generating forces corresponding to haptic effects and imparting these forces to the user's finger and a controller for simulating the haptic effects.

Patent document US2005/0057528 describes a screen having a touch sensitive user interface for command input via local touching of the user interface and generation of a command signal where the extent of touch is sufficient, comprising electrically actuatable means assigned to the user interface to generate a signal that is haptically perceptible to the user in the position touched on the user interface. US2009/106655 published after the earliest declared priority date of the present application, discloses a touch screen telephone in which a processor can calculate when a user's finger is expected to contact the touch screen. In anticipation of this contact, the processor initiates a haptic effect, thus avoiding a lag time caused by a haptic actuator. US2002/0033795 discloses a haptic interface for laptop computers and other portable devices, in which haptic sensations can be output on a touchpad based on interaction between a cursor and a window, menu, icon, web page link etc. For example, a "bump" or pulse can be output on the touchpad to signal the user when the cursor is moved over a border of a window. When a rate control or scrolling function is performed, sensations can be output related to the rate control functions.

### Summary

The present invention is as set out in the appended claims.

### Brief Description of the Drawings

A full and enabling disclosure is set forth more particularly in the remainder of the specification. The specification makes reference to the following appended figures.
Figure 1A shows an illustrative system for providing surface-based haptic effects.
Figure 1B shows an external view of one embodiment of the system shown in Figure 1A.
Figure 1C illustrates an external view of another embodiment of the system shown in Figure 1A.
Figures 2A-2B illustrate an example of simulating a feature using a surface-based haptic effect.
Figures 3A-3B depict an illustrative hardware architecture for varying the coefficient of friction of a surface.
Figures 4A-4B depict another illustrative hardware architecture for varying the coefficient of friction of a surface.
Figure 5 is a flowchart showing an exemplary method for providing a simulated feature by using surface-based haptic effects.
Figures 6A-6D each depict an illustrative simulated feature.
Figure 7 is a flowchart showing an exemplary method for providing a simulated feature by using a reference file.
Figure 8 is an example of a reference file including data for simulating features of a touch surface.

### Detailed Description

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used on another embodiment to yield a still further embodiment. Thus, it is intended that this disclosure include modifications and variations as come within the scope of the appended claims and their equivalents.

Illustrative Example of a Device Using a Variable Friction Interface

One illustrative embodiment of the present invention comprises a computing system such as an iPod® portable music device or iPhone® mobile device, both available from Apple Inc. of Cupertino, California, or a Zune(R) portable device, available from Microsoft Corporation of Redmond, Washington. The computing system can include and/or may be in communication with one or more sensors, such as an accelerometer, as well as sensors (e.g., optical, resistive, or capacitive) for determining a location of a touch relative to a display area corresponding in this example to the screen of the device.

As the user interacts with the device, one or more actuators are used to provide tactile effects. For example, as a user moves a finger across the device, the coefficient of friction of the screen can be varied based on the position, velocity, and/or acceleration of the finger. Depending on how the friction is varied, the user may perceive a feature in the touch surface that would not otherwise be perceived in the same manner (or at all) if the surface friction were not varied. As a particular example, the friction may be varied so that the user perceives a bump, border, or other obstacle corresponding to an edge of an on-screen button. As will be discussed in further detail below, varying the coefficient of friction can be used in any number of ways to provide information to a user. Additionally, the presence of a feature in the touch surface can be simulated using effects in addition to or instead of varying the coefficient of friction.

Illustrative Systems for Simulating Features by Providing Surface-Based Haptic Effects

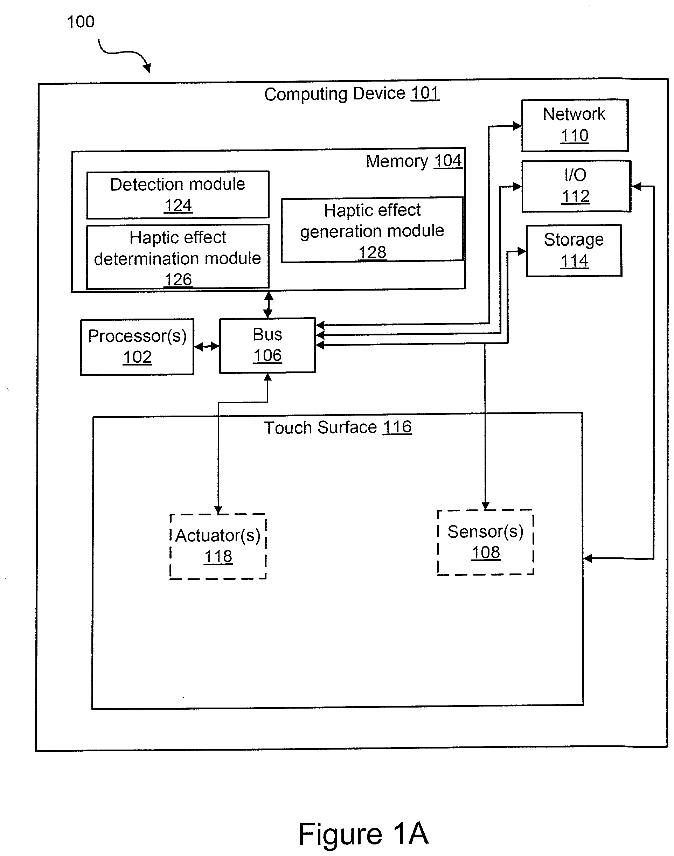

Figure 1A shows an illustrative system 100 for providing a surface-based haptic effect. Particularly, in this example, system 100 comprises a computing device 101 featuring a processor 102 interfaced with other hardware via bus 106. A memory 104, which can comprise any suitable tangible (and non-transitory) computer-readable medium such as RAM, ROM, EEPROM, or the like, embodies program components that configure operation of the computing device. In this example, computing device 101 further includes one or more network interface devices 110, input/output (I/O) interface components 112, and additional storage 114.

Network device(s) 110 can represent any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate connection to devices such as a one or more displays, keyboards, mice, speakers, microphones, and/or other hardware used to input data or output data. Storage 114 represents nonvolatile storage such as magnetic, optical, or other storage media included in device 101.

System 100 further includes a touch surface 116, which is in this example integrated into device 101. Touch surface 116 represents any surface that is configured to sense tactile input of a user. One or more sensors 108 are configured to detect a touch in a touch area when an object contacts a touch surface and provide appropriate data for use by processor 102. Any suitable number, type, or arrangement of sensors can be used. For example, resistive and/or capacitive sensors may be embedded in touch surface 116 and used to determine the location of a touch and other information, such as pressure. As another example, optical sensors with a view of the touch surface may be used to determine the touch position.

In this example, an actuator 118 in communication with processor 102 is coupled to touch surface 116. In some embodiments, actuator 118 is configured to output a haptic effect varying a coefficient of friction of the touch surface in response to a haptic signal. Additionally or alternatively, actuator 118 may provide vibrotactile haptic effects that move the touch surface in a controlled manner. Some haptic effects may utilize an actuator coupled to a housing of the device, and some haptic effects may use multiple actuators in sequence and/or in concert. For example, the coefficient of friction can be varied by vibrating the surface at different frequencies. Different combinations/sequences of variance can be used to simulate the feeling of a texture.

Although a single actuator 118 is shown here, embodiments may use multiple actuators of the same or different type to vary the coefficient of friction of the touch surface. For example, a piezoelectric actuator is used in some embodiments to displace some or all of touch surface 116 vertically and/or horizontally at ultrasonic frequencies, such as by using an actuator moving at frequencies greater than 20kHz in some embodiments. In some embodiments, multiple actuators such as eccentric rotating mass motors and linear resonant actuators can be used alone or in concert to provide different textures and other haptic effects.

Turning to memory 104, exemplary program components 124, 126, and 128 are depicted to illustrate how a device can be configured in some embodiments to provide a variable-friction display. In this example, a detection module 124 configures processor 102 to monitor touch surface 116 via sensor(s) 108 to determine a position of a touch. For example, module 124 may sample sensor 108 in order to track the presence or absence of a touch and, if a touch is present, to track the location, path, velocity, acceleration, pressure and/or other characteristics of the touch over time.

Haptic effect determination module 126 represents a program component that analyzes data regarding touch characteristics to select a haptic effect to generate. Particularly, module 126 comprises code that determines, based on the location of the touch, a simulated feature of the touch surface to generate and code that selects one or more haptic effects to provide in order to simulate the feature. For example, some or all of the area of touch surface 116 may be mapped to a graphical user interface. Different haptic effects may be selected based on the location of a touch in order to simulate the presence of the feature by varying the friction of touch surface 116 so that the feature is felt when a corresponding representation of the feature is seen in the interface. However, haptic effects may be provided via touch surface 116 even if a corresponding element is not displayed in the interface (e.g., a haptic effect may be provided if a boundary in the interface is crossed, even if the boundary is not displayed).

Haptic effect generation module 128 represents programming that causes processor 102 to generate and transmit a haptic signal to actuator(s) 118 to generate the selected haptic effect at least when a touch is occurring. For example, generation module 128 may access stored waveforms or commands to send to actuator 118. As another example, haptic effect generation module 128 may receive a desired coefficient of friction and utilize signal processing algorithms to generate an appropriate signal to send to actuator(s) 118. As a further example, a desired texture may be indicated along with target coordinates for the texture and an appropriate waveform sent to one or more actuators to generate appropriate displacement of the surface (and/or other device components) to provide the texture. The feature may be simulated at least by varying a coefficient of friction of touch surface 116. Some embodiments may utilize multiple actuators in concert to simulate a feature. For instance, a variation in friction may be used to simulate crossing a boundary between simulated piano keys while a vibrotactile effect simulates the response of each key as it is pressed.

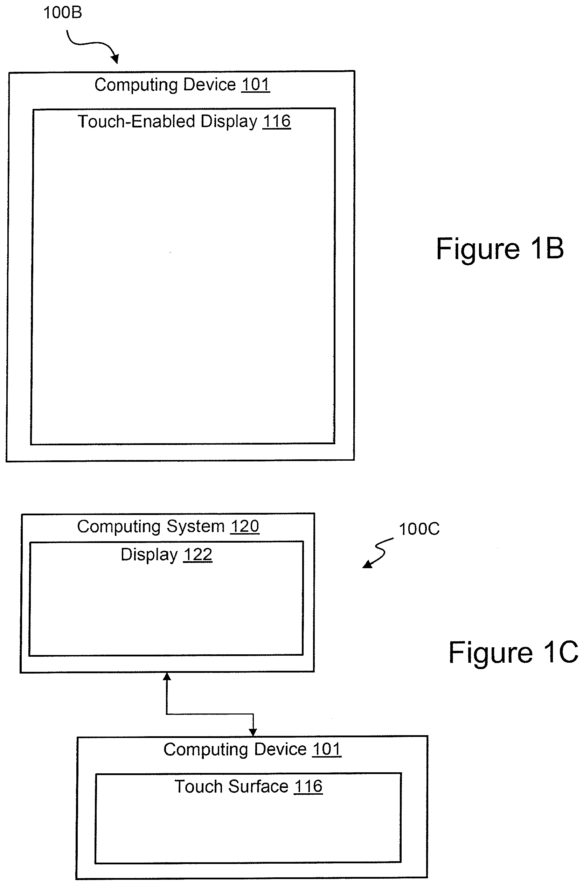

A touch surface may or may not overlay (or otherwise correspond to) a display, depending on the particular configuration of a computing system. In Figure 1B, an external view of a computing system 100B is shown. Computing device 101 includes a touch-enabled display 116 that combines a touch surface and a display of the device. The touch surface may correspond to the display exterior or one or more layers of material above the actual display components.

Figure 1C illustrates another example of a touch-enabled computing system 100C in which the touch surface does not overlay a display. In this example, a computing device 101 features a touch surface 116 which may be mapped to a graphical user interface provided in a display 122 that is included in computing system 120 interfaced to device 101. For example, computing device 101 may comprise a mouse, trackpad, or other device, while system 120 may comprise a desktop or laptop computer, set-top box (e.g., DVD player, DVR, cable television box), or another computing system. As another example, touch surface 116 and display 122 may be included in the same device, such as a touch-enabled trackpad in a laptop computer featuring display 122. Whether integrated with a display or otherwise, the depiction of planar touch surfaces in the examples herein is not meant to be limiting. Other embodiments include curved or irregular touch-enabled surfaces that are further configured to provide surface-based haptic effects.

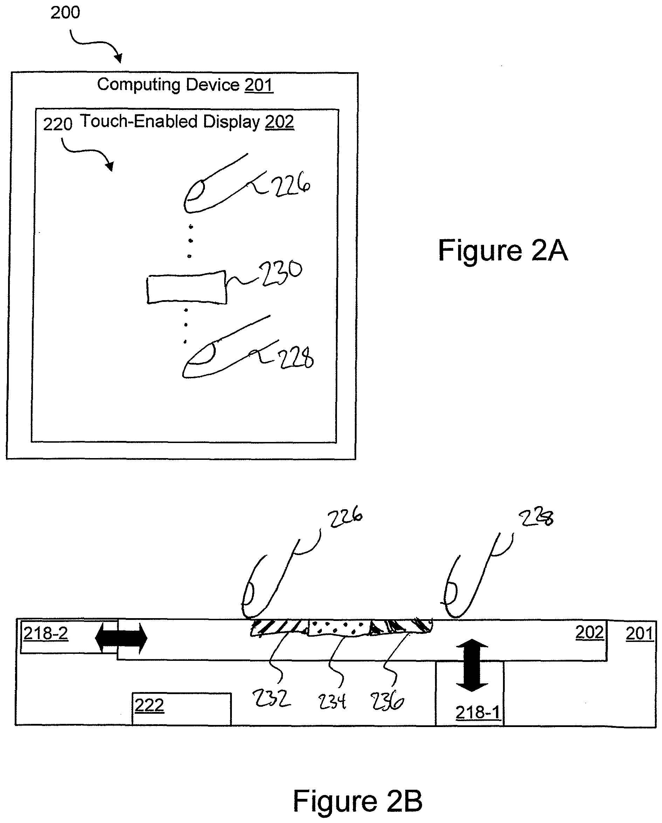

Figures 2A-2B illustrate an example of simulating a feature using a surface-based haptic effect. Figure 2A is a diagram illustrating an external view of a system 200 comprising a computing device 201 that features a touch-enabled display 202. Figure 2B shows a cross-sectional view of device 201. Device 201 may be configured similarly to device 101 of Figure 1A, though components such as the processor, memory, sensors, and the like are not shown in this view for purposes of clarity.

As can be seen in Figure 2B, device 201 features a plurality of actuators 218 and an additional actuator 222. Actuator 218-1 may comprise an actuator configured to impart vertical force to display 202, while 218-2 may move display 202 laterally. In this example, the actuators are coupled directly to the display, but it should be understood that the actuators could be coupled to another touch surface, such as a layer of material on top of display 202. Additional actuator 222 may be coupled to a housing containing the components of device 201. In the examples of Figures 2A-2B, the area of display 202 corresponds to the touch area, though the principles could be applied to a touch surface completely separate from the display.

In one embodiment, actuators 218 each comprise a piezoelectric actuator, while additional actuator 222 comprises an eccentric rotating mass motor, a linear resonant actuator, or another piezoelectric actuator. Actuator 222 can be configured to provide a vibrotactile haptic effect in response to a haptic signal from the processor. The vibrotactile haptic effect can be utilized in conjunction with surface-based haptic effects and/or for other purposes.

In some embodiments, either or both actuators 218-1 and 218-2 can comprise an actuator other than a piezoelectric actuator. Any of the actuators can comprise a piezoelectric actuator, an electromagnetic actuator, an electroactive polymer, a shape memory alloy, a flexible composite piezo actuator (e.g. an actuator comprising a flexible material), electrostatic, and/or magnetostrictive actuators, for example. Additionally, a single actuator 222 is shown, although multiple other actuators can be coupled to the housing of device 201 and/or other actuators 222 may be coupled elsewhere. Device 201 may feature multiple actuators 218-1 / 218-2 coupled to the touch surface at different locations, as well.

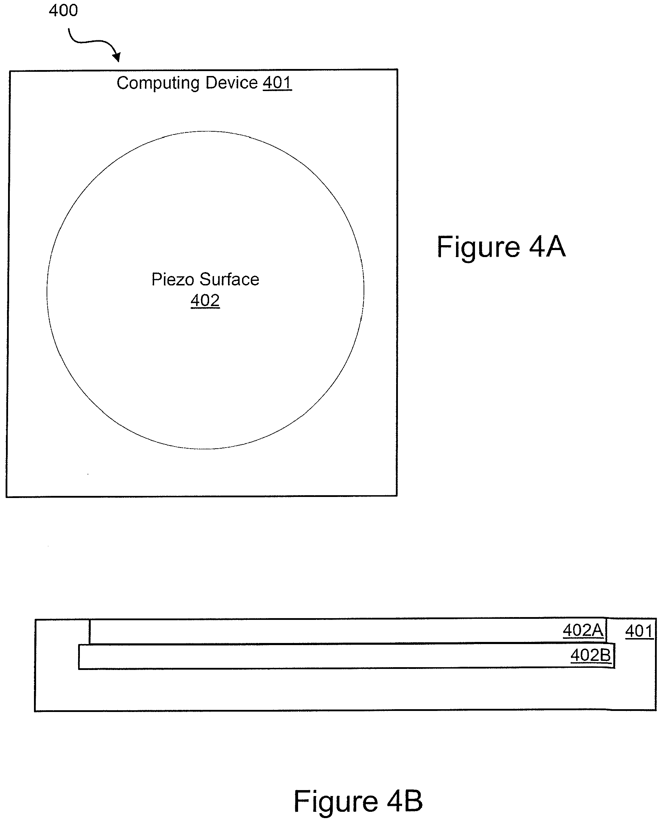

Turning back to Figure 2A, as shown at 220, a finger moves to encounter a simulated feature 230. In this example, a haptic effect is selected for output based on the position of a touch represented by movement of finger 226 downward to position 228. Particularly, as can be seen in Figure 4B, actuators 218-1, 218-2, and/or 222 are provided with appropriate haptic signals to provide surface-based haptic feedback as indicated at 232, 234, and 236. The different cross-hatching is intended to represent different "feel" of the touch surface due to the actuators. For instance, 232, 234, and 236 can represent variations in the texture or coefficient of friction of the touch surface that generate the desired haptic effect. In one embodiment, the feeling of a box can be simulated by having a first area 232 of higher friction followed by a second area 234 of lower friction and a third area 236 of higher friction.

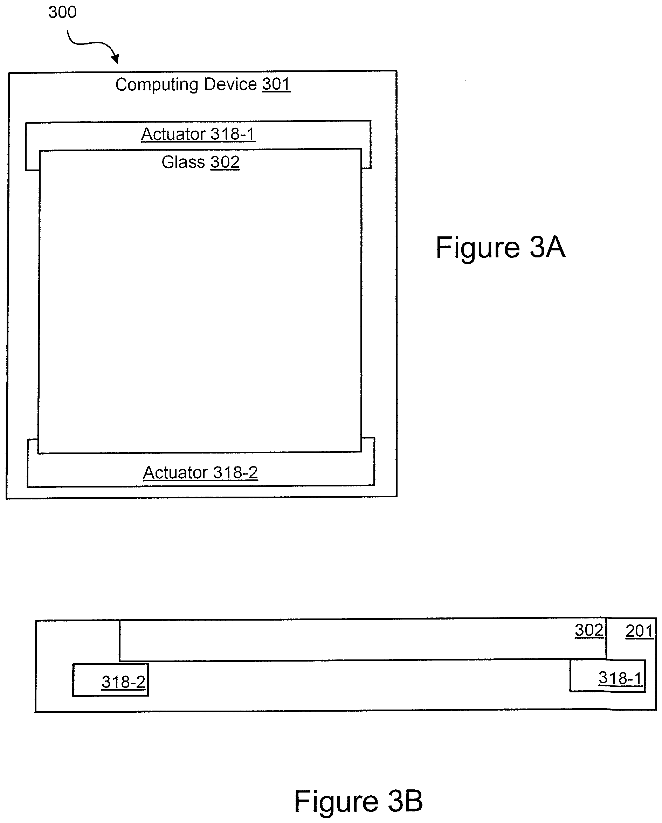

Figures 3A-3B depict an illustrative hardware architecture for varying the coefficient of friction of a surface. In this example, the touch surface comprises glass panel 302, although another transparent material (or non-transparent) material could be used. For instance, rather than glass, a touchpad (i.e. touch-sensitive device) could be used. A pair of piezoelectric benders 318-1 and 318-2 are bonded to the glass. Use of glass or another transparent material along with free space between the piezoelectric benders can allow for use of a display (not shown) beneath the glass. In some embodiments, the piezoelectric benders can be commanded to reduce the static coefficient of friction of glass 302 by 42%. Some embodiments utilize a bipolar pulse width modulated signal at 24kHz, with varying amplitude used to vary the coefficient of friction. As an example, voltage can vary between - 80 and +80 Volts at a frequency above 20kHz, with friction variation from 0 to 60% depending on voltage magnitude (or PWM magnitude to produce the voltage magnitude). These example voltage, frequency, and variation ranges are for purposes of example only and are not intended to be limiting.

Figures 4A-4B depict another illustrative hardware architecture 400 for varying the coefficient of friction of a surface. In this example, a piezo buzzer presents a piezo surface 402 as part of computing device 401. For instance, one embodiment includes a 0.6mm thick buzzer with a 25mm diameter. As can be seen in Figure 4B, the buzzer comprises a layer of piezoceramic material 402A and a metal disk 402B; in this embodiment, both are 0.3mm thick. The static coefficient of friction may be reduced up to 88% from the original friction value when the buzzer is not activated. In this example, the surface is shown as round, although the principle could be applied to other shapes/surfaces.

### Illustrative Methods for Simulating Features by Providing Surface-Based Haptic Effects

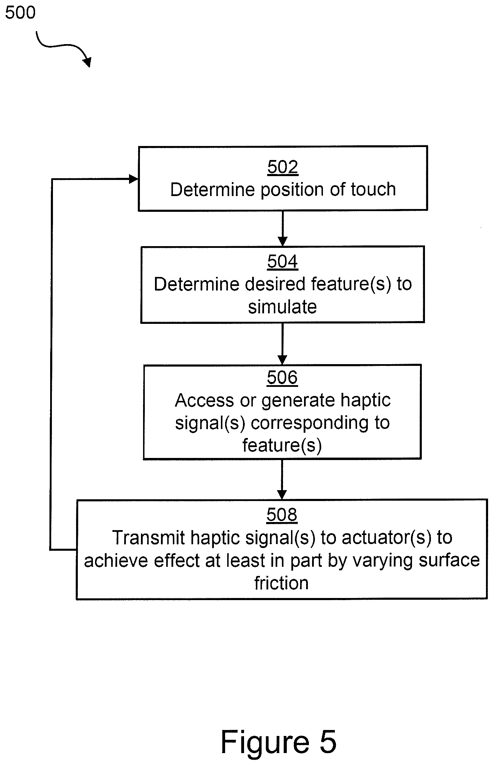

Figure 5 is a flowchart showing an illustrative method 500 for providing an interface with surface-based haptic effects. Block 502 represents determining a position of a touch in a touch area. For example, a processor may utilize one or more sensors embedded in or viewing a touch-enabled display or surface to track a position of a touch on the surface. Based on the current and/or past position of the touch, a present position or predicted position can be determined. As an example, a touch position may be provided in pixel coordinates or another coordinate system for the touch area. If velocity/acceleration is determined, the touch position may be associated with a vector or other information pertaining to position and motion of the touch.

Block 504 represents determining one or more desired features to simulate. In some embodiments, the computing system may simply determine whether or not the touch occurs at a location at which the actuator(s) are to be driven, with the desired feature and haptic signals determined in real time. However, in additional embodiments, the current pixel location and/or a projected pixel location for the touch based on a velocity of the touch can be compared to a bitmap specifying desired haptic effects for various pixel positions. Based on the desired haptic effect(s), suitable haptic signals can be accessed/generated to provide the output specified in the bitmap.

As another example, a current or projected location of a touch can be compared to data identifying the location of graphical user interface (GUI) features such as controls, textual content, boundaries, and the like. Then, if a GUI feature is identified at the location, data associating one or more haptic effects to the feature can be accessed. For instance, a processor may track the location of a touch and determine the touch is at or approaching a position in the touch area mapped to a particular control (e.g., a button) in the graphical user interface. The processor can then consult a listing of interface elements to determine a haptic effect (e.g., a texture, a friction variation) associated with the button and, based on the haptic effect, take further actions to generate the haptic effect.

As a further example, the feature may comprise a texture associated with the current or projected location. For instance, a portion of the touch area may be identified as having a particular texture, such as "fur." When the touch is determined to be at the portion, the computing device can determine that the "fur" feature is desired.

Block 506 represents accessing or generating one or more haptic signals to generate the selected haptic effect(s). For example, a processor may access drive signals stored in memory and associated with particular haptic effects. As another example, a signal may be generated by accessing a stored algorithm and inputting parameters associated with an effect. For example, an algorithm may output data for use in generating a drive signal based on amplitude and frequency parameters. As another example, a haptic signal may comprise data sent to an actuator to be decoded by the actuator. For instance, the actuator may itself respond to commands specifying parameters such as amplitude and frequency.

Block 508 represents transmitting the haptic signal to the actuator(s) to generate the desired effect(s). For instance, if an analog drive signal is to be provided, a processor can utilize an onboard D/A converter to create the signal. If a digital command is provided to the actuator, an appropriate message can be generated by an I/O bus of the processor, with the actuator itself including sufficient processing capability to provide the desired output. The haptic effect may be felt at the point of the touch and/or elsewhere.

In some embodiments, a baseline haptic signal may be sent to the actuator(s) to generate an ambient haptic effect even in the absence of a selected haptic effect in order to enhance the range of potential effects the device can produce. Thus, transmitting a haptic signal may comprise sending a stop, command, a zero or minimal signal to the actuator, or another suitable signal to the actuator to reduce intensity in order to the effect of the actuator and thus increase the friction, such as increasing to a level near or at the coefficient of friction for the touch surface when static.

As an example, use of certain actuators, such as piezoelectric actuators, may allow for reduction in the coefficient of friction of a touch surface but not an increase in the coefficient of friction. To provide a range of options, a baseline signal may be provided so that the "ordinary" friction level of the touch surface is below the coefficient of friction the touch surface would have when static. Accordingly, haptic effects may be defined with respect to the baseline, rather than static, value. If maximum friction is desired, a "zero" signal may be sent to the piezoelectric actuator to stop movement of the surface.

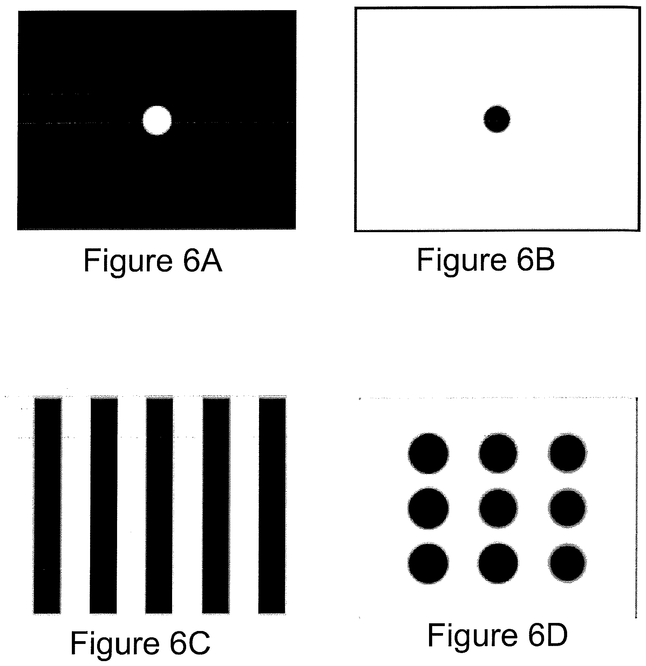

Figures 6A-6D each depict an illustrative simulated feature. Figure 6A shows a simplified example in which the white area represents an area where piezoelectric or other actuators will be activated, such as by using a non-zero voltage PWM signal. For example, the white area may correspond to a virtual button in the middle of a touch pad, where a user's finger (or another object in contact with a surface) will encounter a lower friction value. Figure 6B represents an inverses situation-the finger/object may navigate freely in the white area, but may be slowed or stopped at the high friction (black) area. This may, for example, allow a user to more easily locate a button or other location in the touch area.

Figure 6C illustrates a simulated feature comprising a plurality of grooves. As a user's finger or another object moves horizontally across the stripes, the finger/object will encounter increasing and decreasing friction that is perceived as a series of grooves.

As was noted above, a computing system comprising a touch surface configured to provide surface-based haptic effects may determine effects and signals in real time. For example, for any of Figures 6A-6D, the system may first determine if the touch position is inside the circle and, if so, provide a suitable output value (Figure 6A) or cease output (Figure 6B). Similarly, the system may provide the feature of Figure 6C by determining if the touch occurs in an area with desired high-friction and, if so, drive the actuator(s).

Figure 6D presents a more complex pattern. For instance, the pattern in Figure 6D may correspond to desired features associated with an array of keys, such as an array of mobile phone keys, a simulated keyboard, or other controls. Although real time rendering could be used for any of Figures 6A-6D, more complex logic may be needed to render each specific circle/button in the pattern. These and even more arbitrary patters may increase the complexity of programming and computation time. Thus, in some embodiments, the surface-based haptic effects can be determined ahead of time and stored in a file. At runtime, the file can be accessed based on a touch position to allow for faster determination and generation of appropriate haptic signals. For Figure 6D, such a file could include data to drive the actuators to provide a first haptic effect (e.g., high friction) when the touch position is mapped to the circles, and the file could include data to drive the actuators to provide a second effect (e.g., low friction) when the touch position is mapped to a location outside the circles.

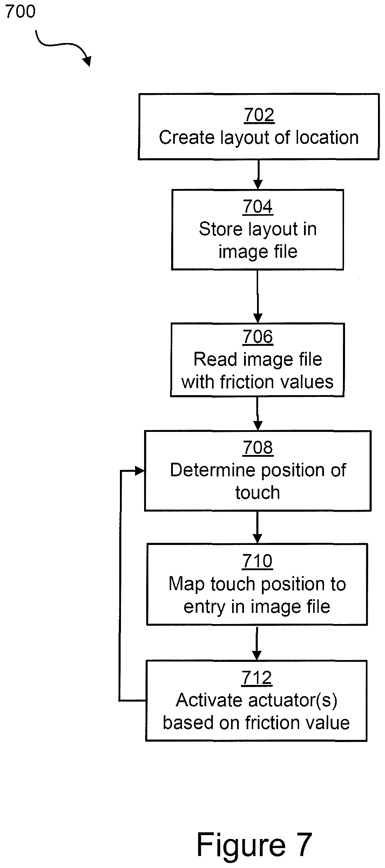

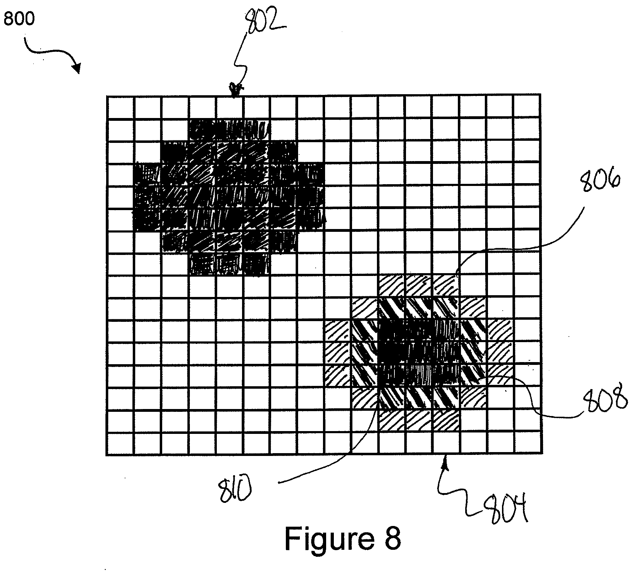

Figure 7 is a flowchart showing an exemplary method 700 for providing a simulated feature by creating and using a reference file. Figure 8 shows an example of a reference file comprising an array of pixels. Blocks 702 and 704 represent preprocessing-activities that occur prior to use of a reference file to determine a haptic effect. In this example, a single reference file is used to determine friction values. In practice, a reference file may provide other data for use in generating haptic effects in addition to or instead of generating variances in friction. Additionally, a "reference file" may comprise multiple files used together.

Block 702 represents creating a layout of a location and block 704 represents storing the layout in an image file, such as an array of pixels in a bitmap or other image file. For example, arbitrary shapes may be "drawn" in order to specify desired friction values. In Figure 8, white pixels are shown to indicate where no friction adjustment is intended, while shaded pixels indicate a value of a desired coefficient of friction or even a value usable to drive an actuator (e.g., a desired PWM voltage level, frequency, etc.). Alternatively, white pixels may indicate maximum drive, while various degrees of shading indicate lower drive values, with black representing zero drive. In an embodiment, white pixels and black pixels only are used, with the colors corresponding to on/off states of the actuators of a device.

In this example, different degrees of shading are represented by cross-hatching. In practice, each pixel may comprise multiple values (e.g., each pixel may have an RGB value), with the multiple values providing different data, such as drive levels for different actuators and the like. Additionally, a reference file may include multiple layers for specifying various parameters for each pixel position. This example shows a relatively small number of pixels; in practice, the array may comprise thousands or millions of pixels.

Shape 802 comprises a solid circle. Shape 804 also comprises a circle, but is provided to indicate that the image file can be used to specify multiple levels of friction (or other haptic effects). For example, transition areas between low and high (or high and low) friction can be provided through use of different shadings, such as the transition from low shading 806 to moderate shading 808 and finally to full shading 810. The transition may correspond to an increasing friction level (or decreasing friction level) as the center of circle 804 is approached.

In some embodiments, transitions can be specified when the layout file is created. In some instances, the transitions may be used to provide offsets of friction values with respect to a visual layout. For example, returning briefly to Figure 6B, a solid shape such as the circle of Figure 6B may be provided in a graphical user interface. The corresponding friction image may more closely resemble a scaled version of circle 804 of Figure 8, providing "fuzzy" edges to represent a transition effect. One method of generating such an image could comprise using an image of an interface and applying a blur or other filter, with the pixel levels adjusted after blurring to provide a desired response when used to generate/select haptic signals.

Returning to Figure 7 and method 700, once a reference file is created, it can be loaded into memory and read as shown at block 706 to determine friction values. For example, some or all of the pixel array may be maintained in working memory of a processor carrying out a position detection and feature simulation routine. In an embodiment, the pixel array is distributed alongside a corresponding image of a graphical user interface. In additional embodiments, the pixel array is a layer or component of the graphical user interface image, and in further embodiments the array is a separate file not associated with a graphical user interface.

Block 708 represents determining a position of a touch. For example, a sensor may provide data used to determine a pixel position of a touch in an array of pixels mapped to a touch area. Non-pixel coordinates may be used in identifying the location of a touch, with appropriate transforms used during the mapping step below.

Block 710 represents mapping the touch position to an entry (or entries) in the image file. For instance, the touch area may be mapped directly so that a touch at pixel (x,y) = (10, 12) results in accessing one or more pixel values in the image at image (x,y) = (10,12). However, more complex mappings may be used. For example, a touch position and velocity may be used to map a pixel value in the touch area to a different pixel value in the image file. For instance, the size of the touch area and the size of the pixel array may differ, with a scaling factor used to map touch locations to pixel values.

Block 712 represents activating one or more actuators to provide a surface-based haptic effect based at least in part on data from the image file. For instance, the pixel value in the image file may be mapped to a desired coefficient of friction. A device carrying out method 700 may determine, based on the pixel position and the desired coefficient of friction, a suitable signal or signals to send to one or more actuators to generate the desired coefficient of friction. As another example, the pixel value may indicate a drive signal more directly, such as a voltage/amplitude/frequency value or offset for a PWM signal to be sent to a piezoelectric actuator. Data of the array may also be configured for use in generating a drive signal for another type of actuator.

As a more complex example, each pixel address may be associated with three intensity values (i.e., RGB). Each of the three intensity values can be associated with a signal intensity/frequency for a corresponding actuator in some embodiments. As another example, some values may specify intensity and others specify duration of operation for the same actuator. As a further example, different pixel intensity values may be correlated to different desired textures or components used to drive actuators to simulate a single texture.

Method 700 may determine touch locations mapped to multiple pixels in the image file. For example, a large touch may correspond to a range of pixel addresses in the image file. Friction or other values from the range of pixel addresses may be considered together, or analysis may be made to "pinpoint" the touch location and use a value from a corresponding single pixel address.

In some embodiments, a computing device featuring a touch surface with surface-based haptic effects can output different surface-based haptic effects based on sequences of inputs. Thus, the simulated features of the touch surface can vary based on a state of a device associated with the surface. In some embodiments, this can be implemented using a reference file with multiple layers; each layer can correspond to a particular state. The states can be changed based on various input conditions, for instance.

For example, a touch surface may be configured to act as a keypad, such as on a mobile device. The keypad may feature three rows of keys corresponding to numbers 1-9 and a fourth row with "0," "*", and "#" keys. For an initial state, the touch surface may be configured to provide a centering feature, such as a higher friction level at the "5" key than in the remainder of the layout.

The computing device can be configured to change the state of the touch surface in response to user input based on tracking the input relative to the touch-sensitive area. For example, once the system determines that the user has found the "5" key, e.g. by detecting touching, hovering, or other activity indicating that the key has been located (but not necessarily selected), the surface-based effects can be provided based on a different state. If a multi-layer reference file is used, for example, a different layer can be loaded into memory. In the second state, for instance, boundaries between keys can be provided so that a user can proceed from the center to a desired key without the need for visual feedback (although, of course, visual, auditory, or other feedback can be provided alongside any embodiments of the present subject matter).

Other Illustrative Embodiments of Simulated Features

Surface-based haptic effects may take any suitable form, including, but not limited to, effects based on varying the coefficient of friction of the touch surface. As another example, vibrotactile effects may be used, such as vibrations or series of vibrations. Vibrotactile effects and/or variations in friction may be used to simulate the feeling of distinct features, such as boundaries or obstacles. For example, a boundary or edge may be simulated by an increase in friction, with the friction decreasing if the boundary is crossed (in some instances) as noted above.

Features simulated using the touch surface can comprise any discontinuity, including, but not limited to, simulated gaps, protrusions, obstacles, and the like. Additionally or alternatively, a simulated feature can comprise an area with a changed coefficient of friction. For example, some haptic effects may comprise variations in the friction of the touch surface - some portions may be rendered "slicker" or "rougher" than others. In some embodiments, a simulated feature includes a texture simulated by varying the coefficient of friction of the surface in a controlled manner.

Patterns of differing friction or patterns of vibration may be provided to mimic the feeling of textures such as brick, rocks, sand, grass, fur, various fabric types, water, molasses, and other fluids, leather, wood, ice, lizard skin, metals, and other texture patterns. Other textures not analogous to real-world textures may also be used, such as high-magnitude vibrotactile or other feedback when a "danger" texture is desired.

The informational content or meaning of surface-based haptic effects can vary in various embodiments. For example, effects may be used to identify particular portions of a touch surface mapped to areas in a graphical user interface, simulated keys or other controls, or may be provided for aesthetic or entertainment purposes (e.g., as part of a design and/or in a game). Effects may be provided for communication purposes as well. For example, Braille or other tactile-based communications methods can be facilitated.

### General Considerations

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, a haptic effect selection routine, and suitable programming to produce signals to generate the selected haptic effects as noted above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A system (100, 200) comprising:
a sensor (108) configured to detect a touch when an object contacts a touch surface (116);
at least one actuator (118, 218, 222) coupled to the touch surface, the actuator configured to receive a haptic signal and output a haptic effect; and,
a processor (102) in communication with the actuator and sensor, the processor configured to:
determine a position of the touch based on data received from the sensor,
select a haptic effect based at least in part on the determined position, the haptic effect selected to simulate the presence of a feature (230) in the touch surface at or near the determined position, and,
transmit a haptic signal to generate the selected haptic effect using the actuator,
**characterised in that:**
the processor (102) is further configured to:
determine a predicted position of the touch using the current and past position of the touch;
identify the feature (230) by comparing the predicted position of the touch to the position of the feature; and
access data associated with the selected haptic effect associated with the identified feature.

2. The system (100, 200) as claimed in claim 1, wherein the processor (102) is further configured to determine a pressure of the touch based on data received from the sensor (108), wherein the haptic effect is selected based at least in part on the pressure of the touch.

3. The system (100, 200) as claimed in claim 1 or 2, wherein selecting the haptic effect comprises determining a variation in the coefficient of friction that will simulate the presence of the feature at or near the determined position.

4. The system (100, 200) as claimed in any of claims 1, 2, or 3, wherein the identified feature (230) comprises a texture at or near the determined position.

5. The system (100, 200) as claimed in any of claims 1- 4, wherein the identified feature (230) comprises a boundary between a first region displayed in a display area and a second region in the display area, the display area mapped to a touch area.

6. The system (100, 200) as claimed in claim 5, wherein the boundary comprises a boundary between two keys of a keyboard depicted in the display area.

7. The system (100, 200) as claimed in any of claims 1-6, wherein selecting the haptic effect comprises:
accessing a mapping file that maps each of a plurality of positions to a respective haptic effect; and,
selecting the haptic effect mapped to the position of the identified feature.

8. The system (100, 200) as claimed in claim 7, wherein the position of the identified feature is determined based on the pixel position of the touch and a velocity of the touch.

9. The system (100, 200) as claimed in any of claims 1-8, wherein the actuator (118, 218, 222) is configured to displace the touch surface vertically, laterally, or vertically and laterally at an ultrasonic frequency.

10. A method, comprising the steps of:
detecting a touch in response to contact between an object and a touch surface (116);
determining (502) a position of the touch based on data from a sensor (108);
selecting a haptic effect to generate based at least in part on the position, the haptic effect selected to simulate the presence of a feature (230) in the touch surface at or near the determined position; and
transmitting a haptic signal to generate the selected haptic effect to at least one actuator (118, 218, 222) coupled to the touch surface, the actuator configured to receive a haptic signal and output a haptic effect;
**characterised by the steps of:**
determining a predicted position of the touch using the current and past position of the touch;
identifying the feature (230) by comparing the predicted position of the touch to the position of the feature; and
accessing data associated with the selected haptic effect associated with the identified feature.

11. A method as claimed in claim 10, wherein generating the haptic effect comprises sending a baseline haptic signal to the actuator (118, 218, 222) to generate an ambient haptic effect in the absence of a selected haptic effect.

12. A method as claimed in claim 11 wherein the baseline haptic signal is operative to decrease the friction level of the touch surface below the coefficient of friction of the touch surface when static.

13. A method as claimed in any of claims 10 to 12, comprising:
i) determining the haptic effect ahead of a runtime generating the haptic effect;
ii) storing said haptic effect in a file;
iii) accessing said file at said runtime based on the touch position.

14. A method as claimed in any of claims 10 to 13, wherein selecting the haptic effect comprises:
accessing a mapping file that maps each of a plurality of positions to a respective haptic effect; and,
selecting the haptic effect mapped to the position of the identified feature.

15. A method as claimed in claim 14, wherein the position of the identified feature is determined based on the pixel position of the touch and a velocity of the touch.

16. A computer-readable medium embodying program code executable by a computing system, the program code operative to perform the method as claimed in any of claims 10-15.

## Patentansprüche

1. System (100, 200) umfassend:
einen Sensor (108), der konfiguriert ist, um eine Berührung zu erfassen, wenn ein Objekt eine Berührungsfläche (116) berührt;
mindestens ein Stellglied (118, 218, 222), das mit der Berührungsfläche gekoppelt ist, wobei das Stellglied konfiguriert ist ein haptisches Signal zu empfangen und einen haptischen Effekt auszugeben; und,
einen Prozessor (102) in Kommunikation mit dem Stellglied und dem Sensor, wobei der Prozessor konfiguriert ist zum:
Bestimmen einer Position der Berührung auf der Grundlage von Daten, die von dem Sensor empfangen werden,
Auswählen eines haptischen Effekts basierend zumindest teilweise auf der Position, wobei der haptische Effekt ausgewählt wird zum Simulieren des Vorhandenseins eines Merkmals (230) in der Berührungsoberfläche an oder nahe der bestimmten Position, und
Übertragen eines haptischen Signals, um den haptischen Effekt unter Verwendung des Stellglieds zu erzeugen,
**dadurch gekennzeichnet, dass**
der Prozessor (102) weiterhin konfiguriert ist zum:
Bestimmen einer vorhergesagten Position der Berührung unter Verwendung der gegenwärtigen und vorherigen Position der Berührung;
Identifizieren des Merkmals (230) durch Vergleichen der vorhergesagten Position der Berührung mit der Position des Merkmals; und
Zugreifen auf Daten, die mit dem ausgewählten haptischen Effekt in Verbindung stehen, der mit dem identifizierten Merkmal in Verbindung steht.

2. Das System (100, 200) gemäß Anspruch 1, wobei der Prozessor (102) ferner konfiguriert ist, um einen Berührungsdruck basierend auf Daten zu bestimmen, die von dem Sensor (108) empfangen werden, wobei der haptische Effekt basierend zumindest teilweise auf dem Berührungsdruck ausgewählt wird.

3. Das System (100, 200) gemäß Anspruch 1 oder 2, wobei das Auswählen des haptischen Effekts das Bestimmen einer Variation des Reibungskoeffizienten umfasst, die das Vorhandensein des Merkmals bei oder nahe der bestimmten Position simuliert.

4. Das System (100, 200) gemäß irgendeinem der Ansprüche 1, 2 oder 3, wobei das identifizierte Merkmal (230) eine Textur an oder nahe der bestimmten Position umfasst.

5. Das System (100, 200) gemäß irgendeinem der Ansprüche 1 bis 4, wobei das identifizierte Merkmal (230) eine Grenze zwischen einer ersten Region, die in dem Anzeigebereich angezeigt wird, und einer zweiten Region in dem Anzeigebereich umfasst, wobei der Anzeigebereich einem Berührungsbereich zugeordnet wird.

6. Das System (100, 200) gemäß Anspruch 5, wobei die Grenze eine Grenze zwischen zwei Tasten einer Tastatur umfasst, die in dem Anzeigebereich wiedergegeben wird.

7. Das System (100, 200) gemäß irgendeinem der Ansprüche 1 bis 6, wobei das Auswählen des haptischen Effekts umfasst:
Zugreifen auf eine Zuordnungsdatei, die jede einer Vielzahl von Positionen einem jeweiligen haptischen Effekt zuordnet; und
Auswählen des haptischen Effekts, der der Position des identifizierten Merkmals zugeordnet ist.

8. Das System (100, 200) gemäß Anspruch 7, wobei die Position des identifizierten Merkmals basierend auf der Pixelposition der Berührung und einer Geschwindigkeit der Berührung bestimmt wird.

9. Das System (100, 200) gemäß irgendeinem der Ansprüche 1 bis 8, wobei das Stellglied (118, 218, 222) konfiguriert ist, um die Berührungsoberfläche vertikal, lateral oder vertikal und lateral mit einer Ultraschallfrequenz zu verschieben.

10. Ein Verfahren umfassend die folgenden Schritte:
Erfassen einer Berührung als Reaktion auf einen Kontakt zwischen einem Objekt und einer Berührungsoberfläche (116);
Bestimmen (502) einer Position der Berührung basierend auf Daten von einem Sensor (108);
Auswählen eines haptischen Effekts, um basierend zumindest teilweise auf der Position den ausgewählten haptischen Effekt zu erzeugen, um das Vorhandensein eines Merkmals (230) in der Berührungsoberfläche bei oder nahe der bestimmten Position zu simulieren; und
Übertragen eines haptischen Signals an mindestens ein Stellglied (118, 218, 222), um den ausgewählten haptischen Effekt zu erzeugen, das mit der Berührungsoberfläche gekoppelt ist, wobei das Stellglied konfiguriert ist ein haptisches Signal zu empfangen und einen haptischen Effekt auszugeben;
**gekennzeichnet durch** die Schritte:
Bestimmen einer vorhergesagten Position der Berührung unter Verwendung der gegenwärtigen und vorherigen Position der Berührung;
Identifizieren des Merkmals (230) durch Vergleichen der vorhergesagten Position der Berührung mit der Position des Merkmals; und
Zugreifen auf Daten, die mit dem ausgewählten haptischen Effekt in Verbindung stehen, der mit dem identifizierten Merkmal in Verbindung steht.

11. Ein Verfahren gemäß Anspruch 10, wobei das Erzeugen des haptischen Effekts das Senden eines haptischen Grundliniensignals an das Stellglied (118, 218, 222) umfasst, um einen haptischen Umgebungseffekt in der Abwesenheit eines ausgewählten haptischen Effekts zu erzeugen.

12. Ein Verfahren gemäß Anspruch 11, wobei das haptische Grundliniensignal dazu dient, das Reibungsniveau der Berührungsoberfläche unter den Wert des Reibungskoeffizienten der Berührungsoberfläche zu verringern, wenn sie sich in der Ruheposition befindet.

13. Ein Verfahren gemäß irgendeinem der Ansprüche 10 bis 12 umfassend
i) Bestimmen des haptischen Effekts vor einer Ausführungszeit, die den haptischen Effekt erzeugt;
ii) Speichern des haptischen Effekts in einer Datei;
iii) Zugreifen auf die Datei während der Ausführungszeit basierend auf der Position der Berührung.

14. Ein Verfahren gemäß irgendeinem der Ansprüche 10 bis 13, wobei die Auswahl des haptischen Effekts umfasst:
Zugreifen auf eine Zuordnungsdatei, die jede einer Vielzahl von Positionen einem jeweiligen haptischen Effekt zuordnet; und
Auswählen des haptischen Effekts, der der Position des identifizierten Merkmals zugeordnet ist.

15. Ein Verfahren gemäß Anspruch 14, wobei die Position des identifizierten Merkmals basierend auf der Pixelposition der Berührung und einer Geschwindigkeit der Berührung bestimmt wird.

16. Ein computerlesbares Medium, das einen Programmcode verkörpert, der durch ein Computersystem ausführbar ist, wobei der Programmcode betriebsbereit ist, das Verfahren gemäß irgendeinem der Ansprüche 1 bis 15 auszuführen.

## Revendications

1. Système (100, 200) comprenant :
un capteur (108) configuré pour détecter un toucher lorsqu'un objet entre en contact avec une surface tactile (116) ;
au moins un actionneur (118, 218, 222) couplé à la surface tactile, l'actionneur étant configuré pour recevoir un signal haptique et produire un effet haptique ; et
un processeur (102) en communication avec l'actionneur et le capteur, le processeur étant configuré pour :
déterminer une position du toucher en fonction de données reçues du capteur,
choisir un effet haptique au moins en partie en fonction de la position déterminée, l'effet haptique étant choisi pour simuler la présence d'une caractéristique (230) dans la surface tactile au niveau ou à proximité de la position déterminée, et
transmettre un signal haptique pour générer l'effet haptique choisi en utilisant l'actionneur,
**caractérisé en ce que** :
le processeur (102) est configuré en outre pour :
déterminer une position prédite du toucher en utilisant les positions actuelle et passée du toucher ;
identifier la caractéristique (230) en comparant la position prédite du toucher à la position de la caractéristique ; et
accéder à des données associées à l'effet haptique choisi associé à la caractéristique identifiée.

2. Système (100, 200) selon la revendication 1, dans lequel le processeur (102) est configuré en outre pour déterminer une pression du toucher en fonction de données reçues du capteur (108), dans lequel l'effet haptique est choisi au moins en partie en fonction de la pression du toucher.

3. Système (100, 200) selon les revendications 1 ou 2, dans lequel le choix de l'effet haptique comprend la détermination d'une variation du coefficient de frottement qui va simuler la présence de la caractéristique au niveau ou à proximité de la position déterminée.

4. Système (100, 200) selon l'une quelconque des revendications 1, 2 ou 3, dans lequel la caractéristique identifiée (230) comprend une texture au niveau ou à proximité de la position déterminée.

5. Système (100, 200) selon l'une quelconque des revendications 1 à 4, dans lequel la caractéristique identifiée (230) comprend une limite entre une première région affichée dans une zone d'affichage et une seconde région de la zone d'affichage, la zone d'affichage correspondant à une zone tactile.

6. Système (100, 200) selon la revendication 5, dans lequel la limite comprend une limite entre deux touches d'un clavier représenté dans la zone d'affichage.

7. Système (100, 200) selon l'une quelconque des revendications 1 à 6, dans lequel le choix de l'effet haptique comprend :
l'accès à un fichier de correspondances qui fait correspondre chacune d'une pluralité de positions à un effet haptique respectif ; et
le choix de l'effet haptique correspondant à la position de la caractéristique identifiée.

8. Système (100, 200) selon la revendication 7, dans lequel la position de la caractéristique identifiée est déterminée en fonction de la position des pixels du toucher et d'une vitesse du toucher.

9. Système (100, 200) selon l'une quelconque des revendications 1 à 8, dans lequel l'actionneur (118, 218, 222) est configuré pour déplacer la surface tactile verticalement, latéralement, ou verticalement et latéralement à une fréquence ultrasonore.

10. Procédé comprenant les étapes de :
détection d'un toucher en réponse à un contact entre un objet et une surface tactile (116) ;
détermination (502) d'une position du toucher en fonction de données provenant d'un capteur (108) ;
choix d'un effet haptique à générer au moins en partie en fonction de la position, l'effet haptique étant choisi pour simuler la présence d'une caractéristique (230) dans la surface tactile au niveau ou à proximité de la position déterminée ; et
transmission d'un signal haptique pour générer l'effet haptique choisi à au moins un actionneur (118, 218, 222) couplé à la surface tactile, l'actionneur étant configuré pour recevoir un signal haptique et produire un effet haptique ;
**caractérisé par les étapes de** :
détermination d'une position prédite du toucher au moyen des positions actuelle et passée du toucher ;
identification de la caractéristique (230) par comparaison de la position prédite du toucher à la position de la caractéristique ; et
accès à des données associées à l'effet haptique choisi associé à la caractéristique identifiée.

11. Procédé selon la revendication 10, dans lequel la génération de l'effet haptique comprend l'envoi d'un signal haptique de référence à l'actionneur (118, 218, 222) pour générer un effet haptique ambiant en l'absence d'un effet haptique choisi.

12. Procédé selon la revendication 11 dans lequel le signal haptique de référence a pour fonction d'abaisser le niveau de frottement de la surface tactile en dessous du coefficient de frottement de la surface tactile lorsqu'elle est statique.

13. Procédé selon l'une quelconque des revendications 10 à 12, comprenant :
i) la détermination de l'effet haptique avant une exécution générant l'effet haptique ;
ii) le stockage dudit effet haptique dans un fichier ;
iii) l'accès audit fichier lors de ladite exécution en fonction de la position du toucher.

14. Procédé selon l'une quelconque des revendications 10 à 13, dans lequel le choix de l'effet haptique comprend :
l'accès à un fichier de correspondances qui fait correspondre chacune d'une pluralité de positions à un effet haptique respectif ; et
le choix de l'effet haptique correspondant à la position de la caractéristique identifiée.

15. Procédé selon la revendication 14, dans lequel la position de la caractéristique identifiée est déterminée en fonction de la position des pixels du toucher et d'une vitesse du toucher.

16. Support lisible par ordinateur intégrant un code de programme exécutable par un système informatique, le code de programme ayant pour fonction d'effectuer le procédé selon l'une quelconque des revendications 10 à 15.
